# EUROPEAN PATENT SPECIFICATION

(11) **EP 2 562 409 B1**
(45) Date of publication and mention of the grant of the patent: **05.03.2014**
(21) Application number: 11290381.0
(22) Date of filing: 24.08.2011
(51) Int. Cl.: F02M 35/10, F16L 27/108

(54) **Duct for a fluid**
Leitung für ein Fluid
Conduit pour fluide

(43) Date of publication of application: 27.02.2013
(73) Proprietor: MANN+HUMMEL GmbH, 71638 Ludwigsburg (DE)
(72) Inventor: Bedouet, Cécile, 53810 Changé (FR); Cottereau, Marc, 53000 Laval (FR); Sarrazin, Maxime, 53260 Entrammes (FR)

(56) References cited:
- EP-A1- 0 398 086
- EP-A1- 1 964 706
- EP-A2- 0 295 444
- EP-A2- 2 147 780
- DE-A1- 2 655 472
- DE-A1- 3 932 834
- DE-A1-102007 008 859
- DE-A1-102010 007 900
- JP-A- 2004 176 849
- US-A- 2 841 419
- US-A- 5 102 150

## Description

### Technical Field

The present invention relates to a duct for a fluid, in particular a gas, in particular an air duct of a turbocharged internal combustion engine in particular of a motor vehicle, having at least two rigid piping components, which are interconnected impermeable to fluid by way of a flexible means of connection.

### State of Technology

From the market an air duct of a turbocharged internal combustion engine of a motor vehicle is known for piping air from a compressor of a turbocharger to the engine. Since the air from the compressor is hot, the air duct needs to resist temperatures higher than 180 °C up to more than 240 °C. Besides the air duct needs to compensate movements of the engine relative to the intercooler. The air duct has at least two rigid piping components which resist high temperatures. The piping components are interconnected impermeable to air by way of a rubber hose. The rubber hose is fixed to each piping components by use of clamp rings. The rubber hose is flexible and resists high temperature too.

The JP 2004 176849 A discloses a joint structure for piping with a cylindrical elastic member provided with a large bore part in one end side and a small bore part in another end side.

The EP 2 147 780 A2 shows a multilayer structure forming a decoupling flexible connector having an axially central part, which is wavy and/or bent and ends axially by connecting two ends to an air intake system, where the connection is able to support all three-dimensional displacements of a turbo compressor.

From US 2 841 419 A a pipe coupling is known, comprising a cylindrical pipe, a cylindrical sleeve-like adaptor, wherein U-shaped seals seal between the adaptor and the pipe.

The DE 39 32 834 A1 discloses a connection for two pipes conveying hot media. At least one circular, radially extending sealing-membrane joins the pipe ends. The outer and inner peripheral parts of the sealing membrane set are axially compressed between walls which join the axially parallel walls of the annular compartment.

From DE 10 2007 008859 A1 a vacuum pipe is known, having two ducts connected by a damper. Between the opening edges of the outer tube and the inner tube a flexible collar is attached, providing a vacuum-tight connection of the two opening edges between the inner tube and the outer tube.

It is an object of the invention to provide a duct for a fluid which resists high temperatures and which is flexible in particular for compensating movements between the components which are connected by the duct.

### Disclosure of Invention

The object is achieved by that at least one of the piping components has a tubular exterior connecting section and another one of the at least two piping components has a tubular interior connecting section, the outer dimensions of the interior connecting section in the radial direction are smaller than the inner dimensions of the exterior connecting section, the interior connecting section is plugged into the exterior connecting section and a clearance between the interior connecting section and the exterior connecting section allows a movement between the two piping components and a radial outer edge of a flexible annular diaphragm, which is impermeable to fluid, is fixed tight to the exterior connecting section and a radial inner edge of the diaphragm is fixed tight to the interior connecting section.

The piping components are plugged together by keeping a clearance, so that they can move relative to each other for compensating movements between the components which are connected by the duct. The piping components are interconnected by the annular diaphragm. The diaphragm can be arranged in a space between the interior connection section and the exterior connection section. The diaphragm is fixed tight at each of the two piping components. The interconnection of the piping components by way of the diaphragm is impermeable to fluid. The flexibility of the diaphragm allows a movement of the piping components. The flexibility can be achieved by folding or rolling up and/or stretching the diaphragm. The flexibility of the diaphragm can be limited in particular by its dimension between its edges. So the diaphragm can limit the movements of the piping components relative to each other. Furthermore the diaphragm can be designed to withstand pressure differences between the interior of the duct and a surrounding. The piping components and the diaphragm can be resistant against high temperatures and high pressures, so that the duct can be used as an air duct of a turbocharged internal combustion engine for piping hot air from the compressor of the turbocharger to the engine.

According to the present invention the duct with the pipe components can be used for the flow of the fluid on the "hot side" of an engine like between turbocharger and intercooler or on the "cold side" for fluid between intercooler and throttle body.

According to a favourable embodiment of the invention, the diaphragm can have a fibrous material, in particular textile fibers, for reinforcement. So the diaphragm has an even better robustness against high temperatures and/or pressures. Additional the limitation of the movement of the piping components achieved by the diaphragm can be improved. In particular more precise limits can be reached.

According to the invention, the dimension of the diaphragm between its radial inner edge and its radial outer edge is larger than the distance between the radial inner circumferential side of the exterior connecting section and the radial outer circumferential side of the interior connecting section. In this way the diaphragm flexible can be folded or rolled up and unfolded or unrolled for compensating the movements of the piping components. It is not necessary, that the diaphragm is stretchable. If the diaphragm is not stretchable, the movement between the piping components can be limited by the dimension of the diaphragm more precise.

Alternatively according to favourable not claimed embodiment of the invention, the dimension of the diaphragm between its radial inner edge and its radial outer edge can correspond to the distance between the radial inner circumferential side of the exterior connecting section and the radial outer circumferential side of the interior connecting section. Thus the diaphragm holds the two piping components tight. A movement of the piping components can be compensated by stretching the diaphragm. The force for restitution of the diaphragm can be laid down by the material and/or the thickness of the diaphragm. So the movement of the piping components can be impeded.

Particularly, at least one of the connecting sections can have a main part on which an annular cap is fixed and the corresponding edge of the diaphragm is clamped between the main part and the cap. So the edges of the diaphragm can be compressed between the cap and the main part. In this way a robust and tight sealing between the diaphragm and the connecting sections can be easily realized. The cap can be fixed on the main part by gluing, welding or screwing in particular.

Advantageously the connecting section can be an independent module fixed to the piping components. In this case the diaphragm can be fixed in a circumferential frame made of a thermoplastic material. The frame is fixedly connected to the connecting section of the piping components, e.g. by welding. The frame could be directly moulded to the diaphragm to have tight joint.

According to the invention, an annular cavity for the diaphragm is arranged radially between the exterior connecting section and the interior connecting section. The diaphragm can be kept space-saving in the cavity. The diaphragm can be easily protected in the cavity against environmental influences. In the cavity the diaphragm also can be folded or rolled up.

The open edge of the exterior connection section, in particular the open edge of the annular cap, has an exterior collar which is directed to the radial outer circumferential side of the interior connecting section, in particular the open edge can be bent toward the interior connection section. The exterior collar so can protect the diaphragm against the environmental influences. Further the exterior collar can prevent sections of the diaphragm to get out of the space between the interior connection section and the exterior connection section.

According to the invention, an interior collar can be arranged at the radial outer circumferential side of the interior connecting section axially placed between the radial inner edge of the diaphragm and the open edge of the exterior connection section, in particular the open edge of the annular cap. The interior collar can easily protect the diaphragm against the environmental influences. Further the interior collar can prevent sections of the diaphragm to get out of the space between the interior connection section into the exterior connection section. Further the interior collar can interact with a possible exterior collar as a stop to prevent the interior connecting section to slip out of the exterior connecting section.

The shape of the surface of the interior collar on the opposite side of the open edge of the interior connection section corresponds to the shape of the inner surface of the bent open edge of the exterior connection section, in particular the open edge of the annular cap, which shows to the interior collar. In this way the surface of the interior collar can be flushed with the surface of the exterior collar in a stop position for preventing the interior connection section to slip out of the exterior connection section.

Advantageously the piping components can be made of a thermoplastic. Thermoplastic can be easily formed. Further, thermoplastic can resist heat and pressure. Piping components made of thermoplastic can be rigid. In addition, thermoplastic is light.

The pipe components can be manufactured by injection molding process or blow molding process. A duct manufactured by blow molding can be connected to a duct made by injection molding.

### Brief Description of Drawings

The present invention together with the above-mentioned and other objects and advantages may best be understood from the following detailed description of the embodiments, but not restricted to the embodiments, wherein is shown schematically
- Figure 1: a longitudinal section of an air duct of a turbocharged internal combustion engine of a motor vehicle with four rigid piping components which are interconnected by flexible means of connections with diaphragms according to a first embodiment;
- Figure 2: a detail drawing of one of the means of connections of the air duct of Figure 1 where the diaphragm is U-shaped;
- Figure 3: a detail drawing of the means of connection of Figure 2 where the diaphragm is S-shaped;
- Figure 4: a detail drawing of a means of connection similar to the means of connection of Figure 1 according to an embodiment according to the invention;
- Figure 5: a detail drawing of a means of connection similar to the means of connection of Figure 1 according to a third embodiment;
- Figure 6: a detail drawing of a means of connection similar to the means of connection of Figure 1 according to a fourth embodiment.

In the drawings, equal or similar elements are referred to by equal reference numerals. The drawings are merely schematic representations, not intended to portray specific parameters of the invention. Moreover, the drawings are intended to depict only typical embodiments of the invention and therefore should not be considered as limiting the scope of the invention.

### Embodiment(s)

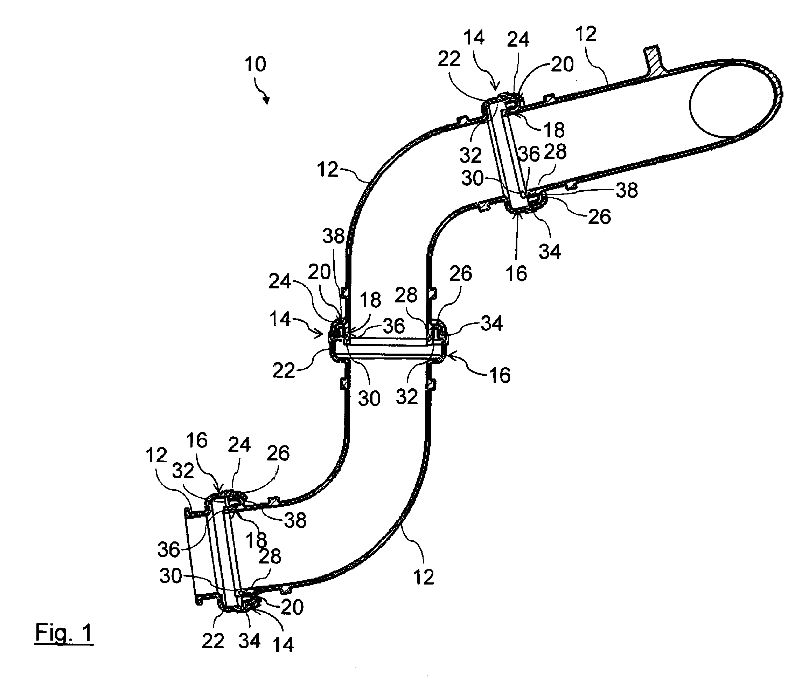

In Figure 1 a longitudinal section of an air duct 10 for intake air of an otherwise not shown turbocharged internal combustion engine of a motor vehicle is shown. The air duct 10 connects an outlet of a compressor of a turbocharger with the intercooler inlet.

The air duct 10 has four rigid piping components 12. The piping components 12 are made of a thermoplastic. The piping component 12 on the left side of Figure 1 is designed as a flange for connecting the air duct 10 to the outlet of the compressor. An open end of the piping component 12 on the right side of Figure 1 contains a not shown flange for connecting the air duct 10 to the air intake of the internal combustion engine. Each of the three piping components 12 on the right side of Figure 1 are bent to approximately 90°.

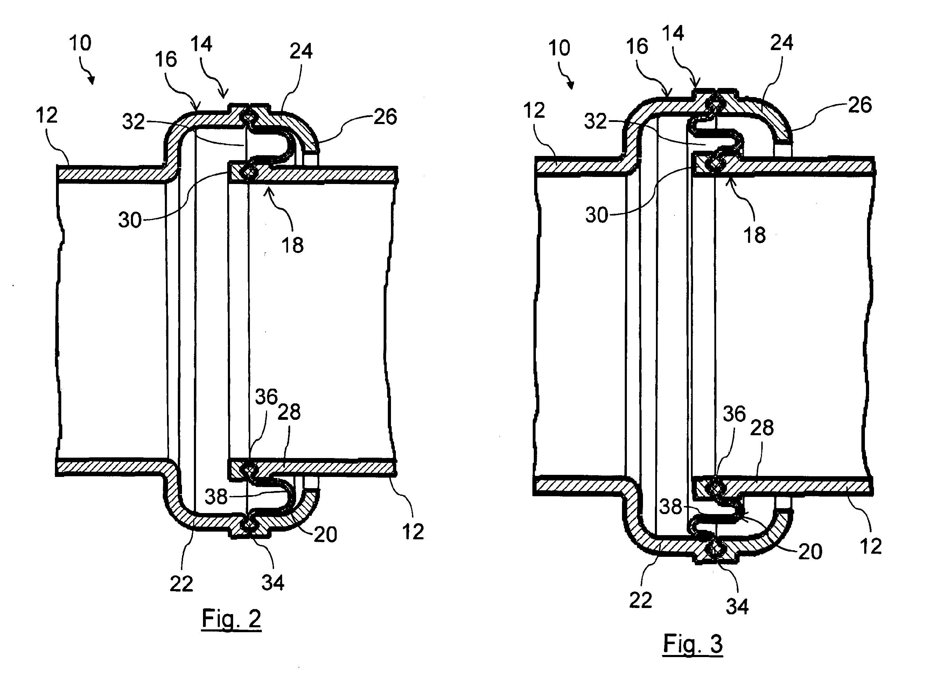

Two of the piping components 12 each are interconnected impermeable to air by way of a flexible means of connection 14 according to a first embodiment. A detail drawing of one of the means of connection 14 is shown in Figure 2. The means of connection 14 comprise a tubular exterior connecting section 16, a tubular interior connection section 18 and a flexible annular diaphragm 20.

The exterior connecting section 16 is part of one of the piping components 12. The interior connecting section 18 is part of the other piping component 12. The outer dimensions of the interior connecting section 18 in the radial direction are smaller than the inner dimensions of the exterior connecting section 16.

The interior connecting section 18 is plugged into the exterior connecting section 16 with a clearance. The clearance between the interior connecting section 18 and the exterior connecting section 16 allows a relative movement of the two piping components 12 in radial and/or axial direction and/or a bending-like movement of the piping components 12 relative to each other.

The exterior connecting section 16 has an exterior main part 22. On the front side of the exterior main part 22 an annular exterior cap 24 is fixed by welding. For realizing an exterior collar 26 the open edge of the exterior cap 24 of the exterior connection section 16 is bent radial inwardly toward the interior connection section 18.

The interior connecting section 18 has an interior main part 28. On the front side of the interior main part 28 an annular interior cap 30 is fixed by welding.

Radially between the exterior connecting section 16 and the interior connecting section 18 an annular cavity 32 is arranged. The diaphragm 20 is placed in the cavity 32. The diaphragm 20 is impermeable to air. It has textile fibers for reinforcement. A radial outer edge 34 and a radial inner edge 36 of the diaphragm 20 each have a surrounding thickening. The radial outer edge 34 is clamped tight between the exterior main part 22 and the exterior cap 24. So the diaphragm 20 is fixed to the exterior connecting section 16. The radial inner edge 36 is clamped tight between the interior main part 28 and the interior cap 30. So the diaphragm 20 is fixed to the interior connecting section 18.

The dimension (arc length) of a flexible section 38 of the diaphragm 20 between the radial inner edge 36 and the radial outer edge 34 is larger than the radial distance between the radial inner circumferential side of the exterior connecting section 16 and the radial outer circumferential side of the interior connecting section 18. The flexible section 38 is folded once toward the exterior collar 26. In Figures 1 and 2 the flexible section 38 is folded U-shaped. The exterior collar 26 protects the flexible section 38 of the diaphragm 20 to the outside. Besides the exterior collar 26 prevents that the flexible section 38 partly gets out of the cavity 32.

When running the internal combustion engine hot air with temperatures even higher than 180 °C up to more than 240 °C flows from the compressor of the turbocharger to the engine. Movements of the engine cause a relative movement between the interior connection sections 18 and the according exterior connection sections 16. Caused by the relative movement the flexible sections 38 of the diaphragms 20 change their shapes for compensating the movement. The diaphragms 20 can make a kind of folding or rolling deformation. A stretching of the diaphragms 20 is not necessary. The flexible sections 38 can fold back or roll back partly or completely. They can take an S-shaped form as shown in Figure 3. So the air duct 10 decouples the movement of the engine and car body, e.g. between turbocharger and intercooler or between intercooler and throttle body. The flexible diaphragms 20 ensure the sealings between the piping components 12.

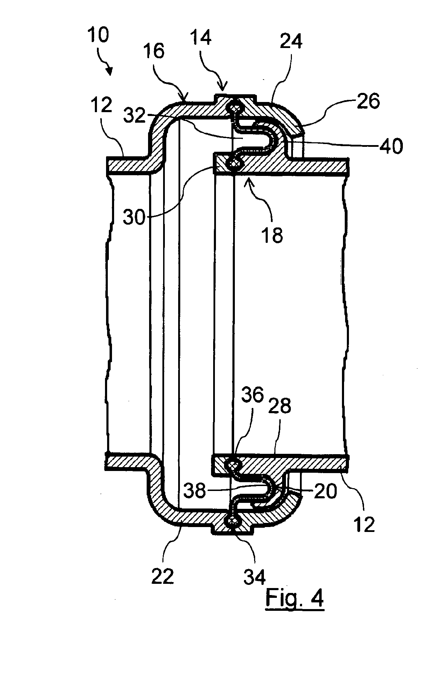

Figure 4 depicts an embodiment according to the invention of means of connection 14. Those parts which are equal to those of the first embodiment according to Figures 1 to 3 have the same reference numbers. Different to the first embodiment, in the second embodiment an interior collar 40 is additionally arranged at the radial outer circumferential side of the interior connecting section 18. The interior collar 40 is placed axially between the diaphragm 20 and the open edge of the exterior cap 24. The shape of the surface of the interior collar 40 on the side opposite to the open edge of the interior connection section 18 corresponds to the shape of the inner surface of the exterior collar 26. The interior collar 40 and the exterior collar 26 interact as a stop for preventing the interior connection section 18 to slip out of the exterior connection section 16. Additionally the interior collar 40 can prevent the flexible section 38 of the diaphragm 20 getting caught between the exterior collar 26 and the radial outer circumferential side of the interior connecting section 18, which can damage the diaphragm 20.

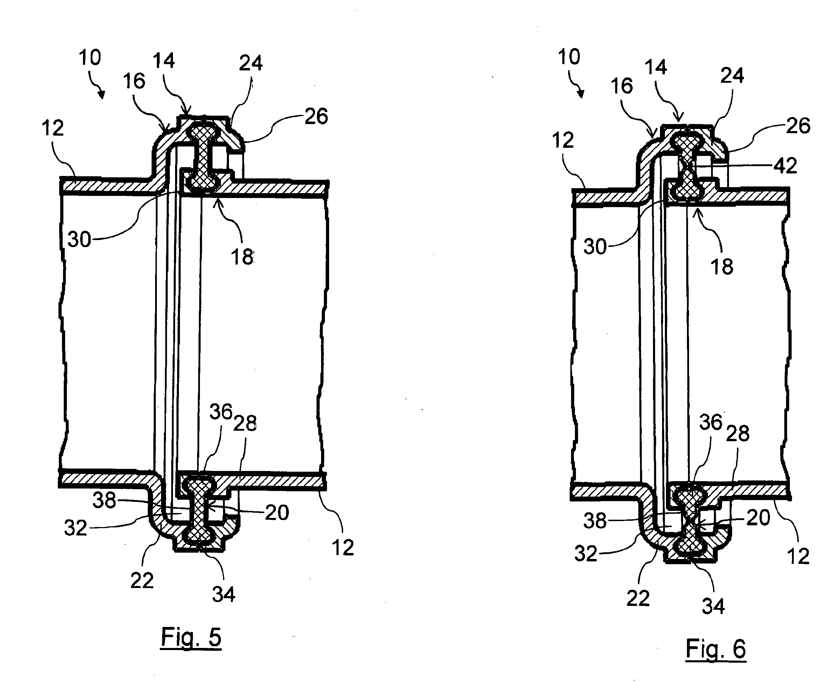

Figure 5 depicts a third embodiment of means of connection 14. Those parts which are equal to those of the first embodiment according to Figures 1 to 3 have the same reference numbers. Different to the first embodiment, in the third embodiment the dimension of the diaphragm 20 between its radial inner edge 36 and its radial outer edge 34 corresponds to the distance between the radial inner circumferential side of the exterior connecting section 16 and the radial outer circumferential side of the interior connecting section 18. Thus the flexible section 38 of the diaphragm 20 needs less space. It is not necessary that the flexible section 38 is folded or rolled up.

Figure 6 depicts a fourth embodiment of means of connection 14. Those parts which are equal to those of the third embodiment according to Figure 5 have the same reference numbers. Different to the third embodiment, in the fourth embodiment a surrounding notch 42 is arranged in the flexible section 38 of the diaphragm 20. This increases the flexibility of the flexible section 38.

The invention is not limited to an air duct 10 of a turbocharged internal combustion engine of a motor vehicle. The invention can also be applied for other kinds of internal combustion engines, particularly industrial engines. The invention can further be applied for ducts for other kinds of fluids, in particular gases.

The air duct 10 can also have less or more than four rigid piping components 12.

The piping components 12 can also be made of another rigid material different from thermoplastic.

The diaphragm is made of a flexible material like rubber or thermoplastic elastomer with mechanical reinforcement like textile fibres.

Instead of textile fibres, another fibrous material can be used for reinforcement of the diaphragm 20.

Alternatively the reinforcement can be realized with woven or knitted or braiding textile.

Alternatively the diaphragm 20 also can be realized without any reinforcement with fibrous material for instance.

Instead of using main parts 22, 26 on which the caps 24, 30 are fixed the connection sections 16, 18 can each be made of one piece. In this case the open edge of the exterior connection section 16 can have the exterior collar 26.

The exterior collar 26 can also be realized by a separate collar which can be arranged on the exterior connection section 16.

The means of connection 14 can also be realized without an exterior collar 26.

The caps 24, 30 can be fixed on the main parts 22, 28 in a way different to welding, by gluing or screwing for example.

## Claims

1. Duct for a fluid, in particular a gas, in particular an air duct (10) of a turbocharged internal combustion engine in particular of a motor vehicle, having at least two rigid piping components (12), which are interconnected impermeable to fluid by way of a flexible means of connection (14), wherein at least one of the piping components (12) has a tubular exterior connecting section (16) and another one of the at least two piping components (12) has a tubular interior connecting section (18), the outer dimensions of the interior connecting section (18) in radial direction are smaller than the inner dimensions of the exterior connecting section (16), the interior connecting section (18) is plugged into the exterior connecting section (16) and a clearance between the interior connecting section (18) and the exterior connecting section (16) allows a movement between the two piping components (12) and a radial outer edge (34) of a flexible annular diaphragm (20), which is impermeable to fluid, is fixed tight to the exterior connecting section (16) and a radial inner edge (36) of the diaphragm (20) is fixed tight to the interior connecting section (18), wherein the dimension of the diaphragm (20) between its radial inner edge (36) and its radial outer edge (34) is larger than the distance between the radial inner circumferential side of the exterior connecting section (16) and the radial outer circumferential side of the interior connecting section (18), wherein the open edge of the exterior connection section (16), in particular the open edge of the annular cap (22), has an exterior collar (26) which is directed to the radial outer circumferential side of the interior connecting section (18), wherein the open edge is bent toward the interior connection section (18), wherein an interior collar (40) is additionally arranged at the radial outer circumferential side of the interior connecting section (18), wherein the interior collar (40) is placed axially between the diaphragm (20) and the open edge of an exterior cap (24), wherein the interior collar (40) and the exterior collar (26) interact as a stop for preventing the interior connection section (18) to slip out of the exterior connection section (16), **characterized in that**, the shape of the surface of the interior collar (40) on the side opposite to the open edge of the interior connection section (18) corresponds to the shape of the inner surface of the exterior collar (26).

2. Duct according to claim 1, **characterized in that** the diaphragm (20) has a fibrous material, in particular textile fibers, for reinforcement.

3. Duct according to one of the previous claims, **characterized in that** at least one of the connecting sections (16, 18) has a main part (22, 28) on which an annular cap (24, 30) is fixed and the corresponding edge (34, 36) of the diaphragm (20) is clamped between the main part (22, 28) and the cap (24, 30).

4. Duct according to one of the previous claims, **characterized in that** an annular cavity (32) for the diaphragm (20) is arranged radially between the exterior connecting section (16) and the interior connecting section (18).

5. Duct according to one of the previous claims, **characterized in that** the piping components (12) are made of a thermoplastic.

## Patentansprüche

1. Leitung für ein Fluid, insbesondere ein Gas, insbesondere eine Luftleitung (10) einer turboaufgeladen Brennkraftmaschine, insbesondere eines Kraftfahrzeugs, mit mindestens zwei steifen Rohrteilen (12), welche undurchlässig für Fluid mittels flexiblen Verbindungsmitteln (14) zusammengeschaltet sind, wobei mindestens eines der Rohrteile (12) einen rohrförmigen äußeren Verbindungsabschnitt (16) und das andere der mindestens zwei Rohrteile (12) einen rohrförmigen inneren Verbindungsabschnitt (18) hat, wobei die Außenmaße des inneren Verbindungsabschnitts (18) in radialer Richtung kleiner sind als die Innenmaße des äußeren Verbindungsabschnitts (16), wobei der innere Verbindungsabschnitt (18) in den äußeren Verbindungsabschnitt (16) gesteckt wird und wobei ein Spiel zwischen dem inneren Verbindungsabschnitt (18) und dem äußeren Verbindungsabschnitt (16) eine Verschiebung zwischen den beiden Rohrteilen (12) erlaubt und wobei eine radiale Außenkante (34) einer flexiblen ringförmigen Membran (20), welche undurchlässig für Fluid ist, dicht an dem äußeren Verbindungsabschnitt (16) befestigt ist und eine radiale Innenkante (36) der Membran (20) dicht an dem inneren Verbindungsabschnitt (18) befestigt ist, wobei das Maß der Membran (20) zwischen ihrer radialen Innenkante (36) und ihrer radialen Außenkante (34) größer als der Abstand zwischen der radialen inneren Umfangsseite des äußeren Verbindungsabschnitts (16) und der radialen äußeren Umfangsseite des inneren Verbindungsabschnitts (18) ist, wobei die offene Kante des äußeren Verbindungsabschnitts (16), insbesondere die offene Kante der ringförmigen Verschlusskappe (22), einen Außenflansch (26) hat, welcher auf die radial äußere Umfangsseite des inneren Verbindungsabschnitts (18) ausgerichtet ist, wobei die offene Kante in Richtung des inneren Verbindungsabschnitts (18) gebogen ist, wobei ein Innenflansch (40) zusätzlich an der radial äußeren Umfangsseite des inneren Verbindungsabschnitts (18) angeordnet ist, wobei der Innenflansch (40) axial zwischen der Membran (20) und der offenen Kante einer äußeren Verschlusskappe (24) angebracht ist, wobei der Innenflansch (40) und der Außenflansch (26) als Anschlag zusammenwirken, um den inneren Verbindungsabschnitt (18) am Herausrutschen aus dem äußeren Verbindungsabschnitt (16) zu hindern, **dadurch gekennzeichnet, dass** die Form der Oberfläche des Innenflansches (40) auf der der offenen Kante des inneren Verbindungsabschnitts (18) gegenüberliegenden Seite der Form der inneren Oberfläche des Außenflansches (26) entspricht.

2. Leitung nach Anspruch 1, **dadurch gekennzeichnet, dass** die Membran (20) Faserstoff zur Verstärkung, insbesondere Textilfasern, aufweist.

3. Leitung nach einem der vorherigen Ansprüche, **dadurch gekennzeichnet, dass** mindestens einer der Verbindungsabschnitte (16, 18) einen Hauptteil (22, 28) aufweist, an welchem eine ringförmige Verschlusskappe (24, 30) befestigt ist und dass die entsprechende Kante (34, 36) der Membran (20) zwischen dem Hauptteil (22, 28) und der Verschlusskappe (24, 30) eingespannt ist.

4. Leitung nach einem der vorherigen Ansprüche, **dadurch gekennzeichnet, dass** ein ringförmiger Hohlraum (32) für die Membran (20) radial zwischen dem äußeren Verbindungsabschnitt (16) und dem inneren Verbindungsabschnitt (18) angeordnet ist.

5. Leitung nach einem der vorherigen Ansprüche, **dadurch gekennzeichnet, dass** die Rohrteile (12) aus thermoplastischem Kunststoff hergestellt sind.

## Revendications

1. Conduit destiné à un fluide, en particulier un gaz, en particulier un conduit d'air (10) d'un moteur à combustion interne à turbocompresseur en particulier d'un véhicule à moteur, comportant au moins deux composants de tuyauterie rigides (12) qui sont interconnectés de façon imperméable au fluide à l'aide d'un moyen souple de raccordement (14), au moins un des composants de tuyauterie (12) comportant une section de raccordement extérieure tubulaire (16) et un autre des composants de tuyauterie (12), au moins au nombre de deux, comportant une section de raccordement intérieure tubulaire (18), les dimensions externes de la section de raccordement intérieure (18) dans la direction radiale étant plus petites que les dimensions internes de la section de raccordement extérieure (16), la section de raccordement intérieure (18) étant insérée dans la section de raccordement extérieure (16) et un dégagement entre la section de raccordement intérieure (18) et la section de raccordement extérieure (16) permettant un mouvement entre les deux composants de tuyauterie (12), et un bord externe radial (34) d'une membrane annulaire souple (20), qui est imperméable au fluide, étant fixé de façon étanche à la section de raccordement extérieure (16), et un bord interne radial (36) de la membrane (20) étant fixé de façon étanche à la section de raccordement interne (18), la dimension de la membrane (20) entre son bord interne radial (36) et son bord externe radial (34) étant plus grande que la distance entre le côté circonférentiel interne radial de la section de raccordement extérieure (16) et le côté circonférentiel externe radial de la section de raccordement intérieure (18), le bord ouvert de la section de raccordement extérieure (16), en particulier le bord ouvert de la coiffe annulaire (22), comportant un collier extérieur (26) qui est dirigé vers le côté circonférentiel externe radial de la section de raccordement intérieure (18), le bord ouvert étant plié vers la section de raccordement intérieure (18), un collier intérieur (40) étant en outre disposé au niveau du côté circonférentiel externe radial de la section de raccordement intérieure (18), le collier intérieur (40) étant placé en sens axial entre la membrane (20) et le bord ouvert d'une coiffe extérieure (24), le collier intérieur (40) et le collier extérieur (26) interagissant en tant que butée pour empêcher la section de raccordement intérieure (18) de glisser hors de la section de raccordement extérieure (16), **caractérisé en ce que** la forme de la surface du collier intérieur (40) sur le côté opposé au bord ouvert de la section de raccordement intérieure (18) correspond à la forme de la surface interne du collier extérieur (26).

2. Conduit selon la revendication 1, **caractérisé en ce que** la membrane (20) comporte un matériau fibreux, en particulier des fibres textiles, destiné au renforcement.

3. Conduit selon l'une des revendications précédentes, **caractérisé en ce qu'**au moins une des sections de raccordement (16, 18) comporte une partie principale (22, 28) sur laquelle la coiffe annulaire (24, 30) est fixée et que le bord correspondant (34, 36) de la membrane (20) est serré entre la partie principale (22, 28) et la coiffe (24, 30).

4. Conduit selon l'une des revendications précédentes, **caractérisé en ce qu'**une cavité annulaire (32) pour la membrane (20) est disposée en sens radial entre la section de raccordement extérieure (16) et la section de raccordement intérieure (18).

5. Conduit selon l'une des revendications précédentes, **caractérisé en ce que** les composants de tuyauterie (12) sont constitués d'un thermoplastique.
